Europäisches Patentamt

European Patent Office

Office européen des brevets

(19)

(11)  EP 0 713 808 A1

(12)  **EUROPÄISCHE PATENTANMELDUNG**

(43) Veröffentlichungstag:
29.05.1996  Patentblatt 1996/22

(51) Int. Cl.⁶: **B60R 21/26**, C06D 5/06

(21) Anmeldenummer: 95119144.4

(22) Anmeldetag: 21.09.1993

(84) Benannte Vertragsstaaten:
DE FR GB IT

(30) Priorität: 21.09.1992 DE 4231521
02.04.1993 DE 4310853

(62) Anmeldenummer der früheren Anmeldung nach Art.
76 EPÜ: 93920783.3

(71) Anmelder:
• DIEHL GMBH & CO.
D-90478 Nürnberg (DE)
• HONDA GIKEN KOGYO KABUSHIKI KAISHA
Minato-ku Tokyo 107 (JP)

(72) Erfinder:
• Schleicher, Ulrich
91217 Hersbruck (DE)
• Klöber, Martin
91180 Heideck (DE)
• Schwarz, Wolfgang
90480 Nürnberg (DE)
• Feuerstake, Eugen
91058 Erlangen (DE)

(74) Vertreter: Weiss, Wolfgang, Dr. Dipl.-Chem. et al
Patentanwälte
Weickmann & Partner,
Kopernikusstrasse 9
D-81679 München (DE)

Bemerkungen:
Diese Anmeldung ist am 05 - 12 - 1995 als
Teilanmeldung zu der unter INID-Kode 62 erwähnten
Anmeldung eingereicht worden.

(54)  **Airbaganordnung**

(57)  Die Erfindung betrifft eine Airbaganordnung, enthaltend einen Gasgenerator, umfassend einen Behälter (2) mit mehreren Ausströmöffnungen (20), in dem sich eine gaserzeugende Treibladung (3) befindet, die in einer Menge von 0,05 bis 0,7 g pro Liter Gasvolumen bei Umgebungsdruck vorhanden ist, das vom Gasgenerator während des Aufblasens des Airbags durch die gezündete Treibladung erzeugt wird, mindestens ein Anzündelement (13, 14) zur Anzündung der Treibladung (3), und einen Raumbereich (29), der den Behälter (2) mindestens im Bereich der Öffnungen (20) umgibt und der (a) durch einen gasdurchlässigen Separator (23, 24, 25) vom Airbagvolumen (31) abgegrenzt ist, oder (b) auf eine solche Weise ausgestaltet ist, daß während des Aufblasens des Airbags durch die gezündete Treibladung (3) in diesem Raumbereich (29) ein höherer Druck als im Airbagvolumen (31) herrscht, oder (c) durch einen gasdurchlässigen Separator (23, 24, 25) abgegrenzt und auf eine solche Weise ausgestaltet ist, daß während des Aufblasens in ihm ein höherer Druck als im Airbagvolumen (31) herrscht.

EP 0 713 808 A1

## Beschreibung

Die Erfindung betrifft eine pyrotechnische Mischung in Form von Granulaten, umfassend eine stickstofferzeugende Substanz, ein anorganisches Oxidationsmittel und als Binder Silikonkautschuk. Die Erfindung betrifft weiterhin ein Verfahren zur Herstellung dieser pyrotechnischen Mischung sowie einen Gasgenerator für einen Airbag, der die pyrotechnische Mischung als Treibladung enthält.

Aus der DE-A-39 20 401 ist ein Gasgenerator für einen Airbag bekannt, bei dem um einen zylindrischen, mit gasfreisetzenden Substanzen gefüllten Druckbehälter eine Kammer angebracht ist. Diese Kammer umgibt ein Filter. Dieser Filter wird von dem Gas durch fußseitig angeordnete Öffnungen angeströmt. Das Gas durchströmt dann den Filter in seiner Längsrichtung und gelangt durch kopfseitig an der Kammer angeordnete Öffnungen in den Airbag. Ein derartiger Gasgenerator benötigt aufgrund seines Druckbehälters genügend dicke Wandstärken. Außerdem ist eine separate Kammer zur Aufnahme des Filters erforderlich. Dadurch ist der Gasgenerator kostenaufwendig. Große Strömungsverluste aufgrund des Filters führen zu kleineren Massenströmen, d.h. die Zeit, die ab der Initiierung der gasfreisetzenden Substanzen verstreicht, bis das Gas den Airbag gefüllt hat, ist groß. Der Treibsatz ist in Form von Tabletten.

Weitere Gasgeneratoren für Airbags sind z.B. in den US-Patenten 3,907,330, 5,087,070 und 5,149,129 beschrieben. Auch in solchen Gasgeneratoren wird das Treibmittel üblicherweise in Form von Pellets, Tabletten oder zylindrischen Formkörpern verwendet. Zum Aufbrechen dieser Formkörper ist eine relativ große Energiemenge erforderlich. Weitere Energieverluste sind durch den langen Weg der Gase in den Gasgenerator bedingt.

EP-A-0 467 731 betrifft eine feste pyrotechnische Zusammensetzung, die ein Alkalimetall- oder Erdalkalimetallazid, ein anorganisches Oxidationsmittel und in einem Anteil von 5 bis 40 % der gesamten Zusammensetzung ein anorganisches Bindemittel enthält, welches das Produkt einer Polykondensationsreaktion von Aluminosilikaten ist. Gemäß EP-A-0 467 731 (Seite 2, Zeilen 42-45) sind organische Bindemittel in pyrotechnischen Zusammensetzungen nicht besonders geeignet, da sie die Bildung toxischer Verbrennungsgase fördern.

DE-A-37 27 851 und DE-A-37 44 750 betreffen pyrotechnische Zusammensetzungen in Form stückiger Körper, die in einem Anteil von 2 bis 6 Gew.-% Fasern, wie etwa Graphitfasern, Fasern aus Eisen oder Glasfasern, enthalten. Zur Verbesserung der Zündung kann der stückige Körper einen Überzug aufweisen, der u.a. Kieselsäure, ein Fluorelastomer und Magnesium enthält. Die Fasern dienen zur Verstärkung des stückigen Körpers und minimieren die Möglichkeit der Entwicklung von Rissen im Körper, durch die unerwünschte zusätzliche Oberflächen geschaffen werden, die eine Beschleunigung der Verbrennungsgeschwindigkeit der stückigen Körper in unvorhersagbarer Weise bewirken würden.

Die japanische Offenlegungsschrift 63-57258 betrifft eine pyrotechnische Zusammensetzung für Airbags, die ein Puffermaterial in Form eines Netzes aus rostfreien Stahlfasern enthält. Für einen Airbag an der Fahrerseite (der üblicherweise ein Volumen von ca. 60 l aufweist) werden 87 g der gaserzeugenden Mischung verwendet. Für einen Airbag auf der Beifahrerseite (der üblicherweise ein Volumen von ca. 120 bis 150 l aufweist) werden 400 g der gaserzeugenden Mischung verwendet. Diese großen Mengen von gaserzeugender Mischung führen zu Entsorgungsproblemen bzw. zu einer sehr hohen Erwärmung beim Abbrand der Mischung, die durch die Konstruktion des Gasgenerators abgefangen werden muß, um ein Platzen des Airbags zu verhindern.

DE-OS 23 34 063 und DE-OS 23 51 379 beschreiben die Verwendung von Silikonkautschuk als stickstofffreies sauerstoffhaltiges Bindemittel in einem Kompositpulver, das 78 bis 92 Gew.-% eines Chlorat- oder Perchloratoxidationsmittels enthält. Der bevorzugte Gehalt des Silikonkautschuks wird mit 8 bis 14,6 Gew.-% angegeben. Über dieser Grenze des Bindemittelgehalts wird ein zu großer Kohlenmonoxidgehalt bei der Verbrennung erzielt. Das Kompositpulver wird zu Halmen mit einer Länge von 30 mm und einem Durchmesser von 4,3 mm verpreßt (vgl. DE-OS 23 51 379, Seite 8).

Die veröffentlichte japanische Patentanmeldung 50-040487 beschreibt den Zusatz von $SiO_2$ enthaltenden anorganischen Bindemitteln zu pyrotechnischen Mischungen, die Metallazide und ein anorganisches Oxidationsmittel enthalten. Es wird berichtet, daß bei einem Anteil von mehr als 10 % Bindemittel die Zündung der pyrotechnischen Zusammensetzung stark verlangsamt wird, so daß ein solcher Gehalt in der Praxis nicht geeignet ist

DE-A-41 16 879, veröffentlicht am 26. November 1992, beschreibt eine gaserzeugende Mischung in Form von Granulaten, die aus einem Metallazid, einem Oxidationsmittel und Nitrocellulose bestehen und mit einer schnell brennenden Anzündmischung, die Bor und Kaliumnitrat enthält, überzogen sind. Dieser granulierte Gassatz wird mit Silikonkautschuk in einem Anteil von 35 %, bezogen auf die gaserzeugende Masse, versehen und zu einer folienförmigen, elastischen Schicht geformt. Die Verwendung einer Mischung auf Basis eines Metallazids, eines Oxidationsmittels und Silikonkautschuk in Form von Granulaten als Treibladung in Airbags wird nicht gelehrt.

Ein Nachteil der aus dem Stand der Technik bekannten pyrotechnischen Mischungen für Airbags besteht darin, daß sie, um eine hohe Packungsdichte zu erreichen und um Entmischungen zu vermeiden, in Form von Tabletten, zylindrischen Körpern oder Folien verwendet werden müssen, was aufgrund der geringen verfügbaren Reaktionsoberfläche dazu führt, daß große Mengen dieser Mischungen zum Aufblasen des Airbags benötigt werden. Weiterhin entstehen beim Abbrennen der pyrotechnischen Mischungen große Mengen an stark alkalischen Substanzen (z.B. $K_2O$, $Na_2O$), die trotz Verwendung anorganischer Bindemittel auf Silikatbasis nur schlecht neutralisiert werden können.

Eine Aufgabe der vorliegenden Erfindung bestand somit darin, die oben beschriebenen Nachteile des Standes der Technik mindestens teilweise zu vermeiden, d.h. insbesondere eine für Airbags geeignete pyrotechnische Mischung bereitzustellen, die in geringeren Mengen als bekannte Mischungen verwendbar ist, die gute Abbrandeigenschaften über einen weiten Temperaturbereich zeigt und bei deren Verwendung möglichst wenig toxische Verbrennungsprodukte entstehen.

Diese Aufgaben wird gelöst durch eine pyrotechnische Mischung in Form von Granulaten, umfassend eine stickstofferzeugende Substanz, insbesondere ein Alkalimetall-, Erdalkalimetall- oder Ammoniumazid, ein anorganisches Oxidationsmittel und als Binder Silikonkautschuk, wobei die Granulate jeweils mehrere, durch den Silikonkautschuk zusammengehaltene Teilchen der stickstofferzeugenden Substanz und des anorganischen Oxidationsmittels umfassen, die eine Größe von 1 µm bis 200 µm aufweisen, wobei der Silikonkautschuk in einem Anteil von 13 bis 28 % bezüglich des Gewichts der Gesamtmischung vorliegt.

Die erfindungsgemäße pyrotechnische Mischung zeigt gegenüber bekannten Treibsätzen von Airbaggeneratoren erhebliche Vorteile. Aufgrund ihrer granulierten, z.B. gekörnt-stückigen oder stranggepreßt-stückigen Form hat die erfindungsgemäße Mischung den Vorteil, daß bei der Verbrennung immer eine gleichgroße Verbrennungsoberfläche vorliegt. Damit ist das Abbrandverhalten in einem Hochdruckbehälter reproduzierbar. Die Verbrennung erfolgt dann abhängig von der Anzündung nach allen Seiten bzw. kugelförmig. Ebenfalls ist die Umsetzung der pyrotechnischen Mischung ab dem Zeitpunkt der Anzündung bis zu ihrer vollständigen Verbrennung hervorragend reproduzierbar. Der Verbrennungsdruck über der Verbrennungszeit ist im jedem Zeitpunkt sehr klein und gleichformig. Ebenso ist der maximale Gasdruck klein. Dies hat wiederum zur Folge, daß es durch Verwendung der erfindungsgemäßen pyrotechnischen Mischung möglich ist, einen dünnwandigen Behälter in einem Gasgenerator für Airbags zu verwenden.

Die erfindungsgemäße pyrotechnische Mischung ist in Form von Granulaten, die im allgemeinen eine Korngröße von mindestens 80 µm, vorzugsweise von 200 µm bis 12 mm, besonders bevorzugt von 500 µm bis 4 mm und am meisten bevorzugt von 800 µm bis 2,5 mm aufweisen. Diese für die Korngröße der Granulate angegebenen Werte beziehen sich dabei auf die mittlere Korngröße in der Mischung, d.h. daß einzelne Granulate durchaus außerhalb dieser Größenbereiche liegen können, der überwiegende Anteil der Granulate soll jedoch innerhalb dieser angegebenen Bereiche liegen. Die Korngröße der Granulate kann durch Sieben bestimmt werden.

Die Granulate enthalten Teilchen einer stickstofferzeugenden Substanz und eines anorganischen Oxidationsmittels. Die mittlere Größe dieser Teilchen reicht im allgemeinen von 1 µm bis 200 µm, vorzugsweise von 2 bis 100 µm und besonders bevorzugt von 2 bis 80 µm. Die Herstellung dieser Teilchen kann beispielsweise durch separates Mahlen der stickstofferzeugenden Substanz und des anorganischen Oxidationsmittels auf die gewünschte Teilchengröße durch bekannte Methoden, z.B. in einer Stiftmühle oder in einer Rotormühle, erfolgen.

Die stickstofferzeugende Substanz ist insbesondere ein Alkalimetall-, Erdalkalimetall- oder Ammoniumazid. Es können jedoch auch organische stickstofferzeugende Substanzen, wie etwa Tetrazolderivate, z.B. Guanidinium-5,5'-azatetraazolat, eingesetzt werden. Besonders bevorzugt sind die Alkalimetallazide, insbesondere Natriumazid, Kaliumazid oder Mischungen davon. Am meisten bevorzugt ist Natriumazid.

Das anorganische Oxidationsmittel kann beispielsweise aus der Gruppe der Metallnitrate, Metalloxide, Metallchlorate und Metallperchlorate ausgewählt werden, wobei Metallnitrate und Metalloxide (z.B. Thermitmaterialien) und Metallnitrate, insbesondere die Alkalimetall- oder Erdalkalimetallnitrate bevorzugt sind. Besonders bevorzugt umfaßt das anorganische Oxidationsmittel Kaliumnitrat, Natriumnitrat oder Mischungen davon. In einer ganz besonders bevorzugten Ausführungsform ist die stickstofferzeugende Substanz Natriumazid und das anorganische Oxidationsmittel Kaliumnitrat.

Die stickstofferzeugende Substanz liegt vorzugsweise in einem Anteil von 35 bis 60 % bezüglich des Gewichts der Gesamtmischung, berechnet für Natriumazid als stickstofferzeugende Substanz, vor und das anorganische Oxidationsmittel liegt vorzugsweise in einem Anteil von 20 bis 45 % bezüglich des Gewichts der Gesamtmischung, berechnet für Kaliumnitrat als anorganisches Oxidationsmittel, vor. Diese Anteile für die Bereiche der stickstofferzeugenden Substanz und des anorganischen Oxidationsmittels sind für Natriumazid bzw. Kaliumnitrat berechnet, d.h. sie beziehen sich auf den molaren Anteil dieser Substanzen in der Mischung. Bei Verwendung anderer chemischer Verbindungen als stickstofferzeugende Substanzen bzw. als anorganische Oxidationsmittel können die genannten Prozentbereiche entsprechend dem Molekulargewicht der jeweils verwendeten Substanzen variieren.

In einem weiteren Aspekt betrifft die vorliegende Erfindung eine pyrotechnische Mischung in Form von Granulaten für eine, ein ungiftiges Gas erzeugende Treibladung, umfassend eine stickstofferzeugende Substanz, insbesondere ein Alkalimetallazid oder Erdalkalimetallazid, ein anorganisches Oxidationsmittel, bestehend aus Alkalimetallnitrat und/oder Erdalkalimetallnitrat und Silikonkautschuk, wobei der Azidanteil 35 bis 60 Gew.-%, der Nitratanteil 20 bis 45 Gew.-% und der Silikonkautschukanteil 13 bis 28 Gew.-% beträgt, wobei das Azid und das Nitrat im Granulat eine Korngröße von

1 bis 200 μm besitzen und das Granulat eine Schüttdichte von 0,35 bis 1,2 g/cm³ aufweist.

Die stickstofferzeugende Substanz liegt besonders bevorzugt in einem Anteil von 48 bis 58 % und am meisten bevorzugt von 50 bis 55 % bezüglich des Gewichts der Gesamtmischung, jeweils berechnet für Natriumazid als stickstofferzeugende Substanz, vor. Das anorganische Oxidationsmittel liegt besonders bevorzugt in einem Anteil von 23 bis 33 % und am, meisten bevorzugt in einem Anteil von 25 bis 30 % bezüglich des Gewichts der Gesamtmischung, berechnet für Kaliumnitrat als anorganisches Oxidationsmittel, vor.

Die Teilchen der stickstofferzeugenden Substanz und des anorganischen Oxidationsmittels im erfindungsgemäßen Granulat werden von Silikonkautschuk zusammengehalten, wobei der Begriff "zusammengehalten" umfaßt, daß die Teilchen durch den Silikonkautschuk verklebt sind und auch mindestens teilweise damit umhüllt sein können. Im Inneren kann das erfindungsgemäße Granulat eine schwammartige, poröse Struktur aufweisen. Als Maß für die poröse Struktur des Granulats kann die Schüttdichte bzw. das Verhältnis der Schüttdichte des Granulats zur theoretischen Dichte eines Kompaktkörpers verwendet werden. Das erfindungsgemäße Granulat weist eine Schuttdichte von vorzugsweise 20 bis 70 %, besonders bevorzugt von 20 bis 50 % und am meisten bevorzugt 20 bis 35 % der theoretischen Dichte auf, die aus den spezifischen Dichten der einzelnen Komponenten und ihrem jeweiligen Anteil in der pyrotechnischen Mischung berechnet werden kann. Eine besonders bevorzugte erfindungsgemäße Mischung, die 53,4 Gew.-% Natriumazid, 27,3 Gew.-% Kaliumnitrat und 19,3 Gew.-% Silikonkautschuk aufweist, hat bei einer Schüttdichte von 0,45 g/cm³ eine Schüttdichte von ca. 26 % der theoretischen Dichte, die aus den spezifischen Dichten für Natriumazid (1,85 g/cm³), Kaliumnitrat (2,09 g/cm³) und Silikonkautschuk (ca. 1,2 g/cm³) errechnet werden kann und ca. 1,7 g/cm³ beträgt.

Bei der erfindungsgemäßen pyrotechnischen Mischung wird Silikonkautschuk in einem Anteil von 13 bis 28 % bezüglich des Gewichts der Gesamtmischung als Binder für die Teilchen der stickstofferzeugenden Substanz und des anorganischen Oxidationsmittels verwendet. Der Silikonkautschuk ist vorzugsweise in einem Anteil von 15 bis 25 % und besonders bevorzugt in einem Anteil von 17 bis 23 % bezüglich des Gewichts der Gesamtmischung vorhanden. Mit dem Silikonkautschuk als Binder ist die Granulierung der Teilchen besonders einfach und kostengünstig durchzuführen.

Ein weiterer wichtiger Vorteil der erfindungsgemäßen Mischung ist, daß sie überraschenderweise in einem Temperaturbereich von -40°C bis +100°C im wesentlichen konstante Abbrandcharakteristiken zeigt. Dies ist insbesondere für die Anwendung als Treibladung in Airbags bedeutsam, da ein solcher Airbag über einen sehr weiten Temperaturbereich ein im wesentlichen konstantes Aufblasverhalten zeigen muß. Die Variation der Abbrandcharakteristik der erfindungsgemäßen Mischung in Abhängigkeit von der Temperatur ist denjenigen von bekannten Treibladungen für Airbags, die üblicherweise in Tablettenn- oder Zylinderform vorliegen, deutlich überlegen. Weiterhin gewährleistet die Verwendung von Silikonkautschuk als Binder eine mechanische Abriebfestigkeit und Bruchfestigkeit des Granulats über die maximale Gebrauchdauer eines Airbags von etwa 15 Jahren. Schwingungen und Schockimpulse, wie sie bei Kraftfahrzeugen üblich sind, haben keinen negativen Einfluß auf die Funktion der Treibladung.

Ein weiterer Vorteil bei der Verwendung von Silikonkautschuk als Binder besteht darin, daß beim Verbrennungsvorgang aus dem Silikonkautschuk u.a. Siliciumdioxid und Kohlendioxid entstehen, die mit den durch Zersetzung der stickstofferzeugenden Substanz und des Oxidationsmittels entstehenden Erdalkalimetall- oder Alkalimetalloxiden, wie etwa Natriumoxid ($Na_2O$) und Kaliumoxid ($K_2O$) reagieren können. So entstehen z.B. aus den hochtoxischen und stark alkalischen Oxiden $Na_2O$ und $K_2O$ durch Reaktion mit $SiO_2$ bzw. $CO_2$ ungefährliche Produkte, wie etwa Silikate, z.B. $Na_2SiO_3$ und $K_2SiO_3$, bzw. Carbonate, z.B. $Na_2CO_3$ und $K_2CO_3$.

Ein weiterer überraschender Vorteil der erfindungsgemäßen pyrotechnischen Mischung besteht darin, daß ihre Effektivität im wesentlichen bedingt durch das energieliefernde Bindersystem und die kurze Reaktionszeit gegenüber bekannten Treibsätzen extrem hoch ist. Daher werden erheblich geringere Mengen der erfindungsgemäßen Mischung im Vergleich zu anderen Treibsätzen benötigt. Dennoch werden trotz des hohen Anteils an organischen Materialien beim Verbrennungsvorgang überraschenderweise keine signifikanten Mengen an toxischen Gasen, wie etwa CO, erzeugt. Bisherige Messungen der Verbrennungsgase ergaben beispielsweise einen Anteil von 400 bis 500 ppm CO. Dieser CO-Anteil ist für die Anwendung in Airbags hervorragend geeignet.

Bei Verwendung der erfindungsgemäßen pyrotechnischen Mischung reicht eine verhältnismäßig geringe Menge zur Füllung von Airbags aus. Dies hat wiederum zur Folge, daß der Behälter zur Verbrennung der pyrotechnischen Mischung sehr klein und von einer leichten Bauweise sein kann.

Spezifische Beispiele für geeignete Silikonkautschuksorten sind etwa die Produkte Elastosil M4500 (früher RTVM 521), Gießmasse 56 und RTVM 622 der Firma Wacker Chemie, Deutschland. Es sind jedoch auch andere Silikonkautschuke geeignet. Bei "Silikonkautschuken" im Sinne der vorliegenden Erfindung handelt es sich um in den gummielastischen bis harten Zustand überführbare Massen, welche als Grundpolymere Polyorganosiloxane enthalten, welche einer Vernetzungsreaktion zugängliche Gruppen, z.B. H-Atome, OH- und Vinylgruppen, aufweisen. Weiterhin können in den Kautschuk Füllstoffe als Verstärker eingelagert werden, deren Art und Menge das mechanische und chemische Verhalten des Kautschuks mit beeinflussen kann. Besonders bevorzugt bei der Zündung der pyrotechnischen Mischung sind kaltvulkanisierende (RTV)-Silikonkautschukmassen, wobei sowohl Ein- als auch Zweikomponentensysteme geeignet sind. Die Einkomponentensysteme polymerisieren langsam bei Raumtemperatur unter dem Einfluß von Luftfeuchtigkeit, wobei die Vernetzung im allgemeinen durch Kondensations von SiOH-Gruppen unter Bildung von Si-O-Si-Bindungen erfolgt. Bei den Zweikomponentenkautschuken werden als Vernetzer oder Härter beispielsweise Gemische aus Kieselsäureestern (z.B. Ethylsilicat) oder zinnorganische Verbindungen verwendet, wobei als Vernetzungsreaktion z.B. die Bildung einer Si-O-Si-Brücke durch Alkoholabspaltung erfolgt. Weiterhin können die Silikonkautschuke auch Monomere mit organofunktionellen Gruppen, z.B. Chloraromaten, Estern, Epoxiden, Vinyl-, Allyl-, Amino-, Carboxyl- oder Alkoxygruppen oder in die Makromolekülketten eingebaute Metallatome, z.B. Al, Ti, CO, Ni enthalten. Für Airbaganwendungen sind jedoch Monomere, die zu toxischen Verbrennungsprodukten führen können, wie etwa halogen-, bor- oder schwermetallhaltige Monomere, nicht bevorzugt und sollten, sofern überhaupt, nur in geringen Mengen verwendet werden.

Die Reaktion der stickstofferzeugenden Substanz mit dem anorganischen Oxidationsmittel liefert bei der Zündung der pyrotechnischen Mischung als Gas hauptsächlich reinen Stickstoff entsprechend der Reaktionsgleichung (für Natriumazid als stickstofferzeugende Substanz und Kaliumnitrat als anorganisches Oxidationsmittel):

$$10 NaN_3 + 2 KNO_3 \rightarrow 16 N_2 + K_2O + 5 Na_2O$$

Überraschenderweise brennt die granulierte erfindungsgemäße pyrotechnische Mischung schnell genug, um einen Airbag in der durch Spezifikationen von Automobilherstellern geforderten Zeit von 20 - 40 ms für Airbags auf der Fahrerseite und 50 - 70 ms für Airbags auf der Beifahrerseite aufblasen zu können. Weiterhin läßt sich die granulierte pyrotechnische Mischung billiger herstellen als die bekannten Treibsätze, die gepreßt in tablettierter Form verwendet werden.

Ein weiterer wichtiger Aspekt der vorliegenden Erfindung ist, daß die Teilchen der stickstofferzeugenden Substanz und des anorganischen Oxidationsmittels vorzugsweise nicht von einer schnell brennenden Anzündmischung, z.B. einer borhaltigen Mischung, überzogen sind, da die erfindungsgemäße Mischung bereits eine ausreichende Abbrandgeschwindigkeit aufweist.

In einer bevorzugten Ausführungsform der vorliegenden Erfindung enthält die pyrotechnische Mischung Granulate, die jeweils mehrere, durch einen weiteren Binder zusammengehaltene Vorgranulationsprodukte umfassen, die eine Korngröße von 20 μm bis 5 mm aufweisen. Besonders bevorzugt ist die Korngröße der Vorgranulationsprodukte von 100 μm bis 3 mm, am meisten bevorzugt von 200 μm bis 600 μm.

Der weitere Binder ist günstigerweise in einem relativ geringen Anteil bezüglich der anderen Substanzen vorhanden, d.h. in einem Anteil, der gerade noch ausreicht, um die Vorgranulationsprodukte zusammenzuhalten. Besonders bevorzugt ist der weitere Binder in einem Anteil von 0,8 bis 5 %, am meisten bevorzugt in einem Anteil von 1 bis 3 % bezüglich des Gewichts der Gesamtmischung vorhanden.

Der weitere Binder kann ein beliebiger Binder sein unter der Voraussetzung, daß er keine nachteilige Wirkung für die Verbrennungseigenschaften der pyrotechnischen Mischung aufweist. Beispiele für geeignete Binder sind Schellack, Kautschuk- und Gummibinder und insbesondere Nitrocellulose. In einem besonders bevorzugten Aspekt weist eine erfindungsgemäße Mischung, die Vorgranulationsprodukte umfaßt, eine Zusammensetzung von 52,5 Gew.-% Natriumazid, 26,9 Gew.-% Kaliumnitrat, 1,6 Gew.-% Nitrocellulose und 19,0 Gew.-% Silikonkautschuk auf.

Noch ein weiterer Gegenstand der vorliegenden Erfindung ist eine pyrotechnische Mischung, enthaltend (a) Granulate, die Vorgranulationsprodukte umfassen, und (b) Granulate, die keine Vorgranulationsprodukte umfassen. Durch Variation der Anteile der Komponenten (a) und (b) können die Abbrandcharakteristiken der pyrotechnischen Mischung stark variiert werden. Granulate, die Vorgranulationsprodukte umfassen, besitzen im allgemeinen eine stark poröse Struktur mit einer hohen Reaktionsoberfläche, die einen schnellen Abbrand der Mischung zur Folge hat. Granulate, die keine Vorgranulationsprodukte umfassen, haben im allgemeinen eine geringere Reaktionsoberfläche und zeigen ein langsameres Abbrandverhalten. Durch Bereitstellen einer Mischung der Granulate (a) und (b) kann somit eine Variation der Abbrandcharakteristiken der pyrotechnischen Mischung erzielt werden. Eine derartige Mischung enthält vorzugsweise von 1 bis 99 Gew.-% Granulate (a) und von 99 bis 1 Gew.-% Granulate (b), besonders bevorzugt von 10 bis 90 Gew.-% Granulate (a) und von 90 bis 10 Gew.-% Granulate (b).

Andererseits kann das Abbrandverhalten der erfindungsgemäßen pyrotechnischen Mischung auch dadurch variiert werden, daß man Granulate unterschiedlicher Korngröße und/oder Mischungen von Granulaten, die unterschiedlich große Teilchen enthalten, verwendet. Hierbei gilt im allgemeinen, daß die Abbrandgeschwindigkeit mit abnehmender Größe der Teilchen der stickstofferzeugenden Substanz und des Oxidationsmittels sowie mit abnehmender Größe der Granulate zunimmt. Bei Verwendung der erfindungsgemäßen Mischung in Airbags haben sich beispielsweise Granulate mit einer Korngröße von ca. 1 mm bis 2,5 mm als gut geeignet erwiesen, die aus Vorgranulationsprodukten mit einer Größe von ca. 200 bis 600 μm aufgebaut sind.

Ein weiterer Aspekt der vorliegenden Erfindung betrifft ein Verfahren zum Herstellen einer pyrotechnischen Mischung in Form von Granulaten, umfassend die Schritte:

a) Bereitstellen von Teilchen einer stickstofferzeugenden Substanz, insbesondere eines Alkalimetall-, Erdalkalimetall- oder Ammoniumazids, und eines anorganischen Oxidationsmittels mit einer Teilchengröße von jeweils 1 μm bis 200 μm,
b) Mischen der Teilchen aus a) mit flüssigem Silikonkautschuk, ggf. unter Zusatz eines Härtungsmittels, wobei der Anteil des Silikonkautschuks 13 - 28 % bezüglich des Gewichts der Gesamtmischung ist,
c) Erzeugen von Granulaten aus den gemäß Schritt b) vermischten Materialien mit einer Korngröße von 200 μm bis 12 mm, und
d) Aushärten der Granulate.

Das Bereitstellen der Teilchen einer stickstofferzeugenden Substanz und eines anorganischen Oxidationsmittels kann beispielsweise durch getrenntes Mahlen der Teilchen auf die erforderliche Größe erfolgen, z.B. durch Mahlen in einer Mühle, wie etwa einer Rotor- oder Stiftmühle. Das Mischen der gemahlenen Teilchen mit flüssigem Silikonkautschuk und - sofern erforderlich - unter Zusatz eines Härtungsmittels, kann beispielsweise in einem Kneter erfolgen, wobei darauf zu achten ist, daß man eine homogene Mischung erhält. Die Granulate können beispielsweise durch Pressen der noch feuchten Silikonkautschukmischung durch ein Sieb mit einer gewünschten Maschenweite von z.B. 200 bis 600 μm erfolgen, wobei - sofern dies gewünscht wird - die erhaltenen Granulate nach Trocknung mittels eines Siebs von Feinanteilen getrennt werden können. Das Aushärten der Granulate umfaßt eine Verfestigung des flüssigen Silikonkautschuks und kann beispielsweise dadurch erfolgen, daß man die Granulate für die notwendige Zeitdauer bei einer erhöhten Temperatur hält.

Ein weiterer Aspekt der vorliegenden Erfindung ist ein Verfahren zum Herstellen einer pyrotechnischen Mischung in Form von Granulaten, umfassend die Schritte:

a) Bereitstellen von Teilchen einer stickstofferzeugenden Substanz, insbesondere eines Alkalimetall-, Erdalkalimetall- oder Ammoniumazids, und eines anorganischen Oxidationsmittels mit einer Teilchengröße von jeweils 1 μm bis 200 μm,
b) Mischen der Teilchen aus a) mit einem Binder und gegebenenfalls einem Lösungs- oder Suspendiermittel für den Binder,
c) Erzeugen von Vorgranulationsprodukten aus den gemäß Schritt b) vermischten Materialien mit einer Korngröße von 20 μm - 5 mm,
d) Mischen der Vorgranulationsprodukte aus c) mit flüssigem Silikonkautschuk, gegebenenfalls unter Zusatz eines Härtungsmittels, wobei der Anteil des Silikonkautschuks 13 - 28 % bezüglich des Gewichts der Gesamtmischung ist,
e) Erzeugen von Granulaten aus den gemäß Schritt d) vermischten Materialien mit einer Korngröße von 200 μm - 12 mm, und
f) Aushärten der Granulate.

In dieser Ausführungsform des erfindungsgemäßen Verfahrens werden die Teilchen, nachdem sie auf die erforderliche Größe gebracht worden sind, mit einem Binder und vorzugsweise einem Lösungs- oder Suspendiermittel für den Binder vermischt. Der Binder wird vorzugsweise in einem Anteil von 1 bis 5 %, besonders bevorzugt in einem Anteil von 1 bis 3 % bezüglich des Gewichts der Gesamtmischung zugesetzt. Beispiele für geeignete Binder sind Nitrocellulose, Schellack oder elastomere Binder, z.B. Gummi- und Kautschukbinder. Vorzugsweise wird der Binder vor oder nach Zugabe zu den Teilchen in einem Lösungs- oder Suspendiermittel gelöst oder suspendiert. Beispiele für geeignete Lösungsmittel sind solche Lösungsmittel, die den Binder gut lösen und die gleichzeitig leicht verdampfbar sind und in denen die Teilchen der stickstofferzeugenden Substanz und des anorganischen Oxidationsmittels im wesentlichen unlöslich sind. Beispiele geeigneter Lösungsmittel sind Ketone, wie etwa Aceton und Methylethylketon, Alkohole, wie etwa Ethanol, und Ester, wie etwa Ethylacetat. Beispiele für besonders geeignete Kombinationen von Binder und Lösungsmittel sind Nitrocellulose/Aceton, Schellack/Ethanol und elastomerer Binder/Ethylacetat.

Nach dem Mischen der Teilchen mit dem Binder wird die erzeugte Masse vorzugsweise bis zu einem pastösen bis krümeligen Zustand teilweise getrocknet. Aus dieser teilweise getrockneten Masse werden dann Vorgranulationsprodukte beispielsweise durch Pressen der Masse durch ein Sieb mit einer Größe von z.B. 200 bis 600 μm erzeugt, wobei anschließend gegebenenfalls eine Abtrennung von Feinteilchen erfolgen kann. Die erhaltenen Vorgranulationsprodukte werden dann vor dem Mischen mit dem Silikonkautschuk getrocknet. Das Mischen mit dem Silikonkautschuk, das Erzeugen von Granulaten und das Aushärten der Granulate erfolgt wie oben beschrieben.

Die vorliegende Erfindung betrifft in einem bevorzugten Aspekt ein Verfahren zur Herstellung einer pyrotechnischen Mischung, wobei nach einem Mahlvorgang des Azids und des Nitrats auf eine Teilchengröße von 1 μm bis 200 μm flüssiger Silikonkautschuk, gegebenenfalls mit einem Härtungsmittel, zugegeben wird und anschließend die Granulation der Mischung erfolgt. Nach dem Mahlvorgang der Ausgangskomponenten Azid und Nitrat kann eine Zwischengranulation eingefügt werden, bei der ein Binder, insbesondere Nitrocellulose, eingesetzt wird. Besonders bevorzugt erfolgt die Zwischengranulation durch Zugabe von 1 bis 3 Gew.-%, insbesondere 1,6 Gew.-% Nitrocellulose und weiterhin durch Zugabe eines, Nitrocellulose gut lösenden und leicht verdampfenden Lösungsmittels, insbesondere Aceton, mit nachfolgender Granulation und Trocknung.

Der bei dem erfindungsgemäßen Verfahren zur Herstellung der Granulate eingesetzte Silikonkautschuk besitzt vorzugsweise eine Viskosität von 10 bis 200000 mPas bei 20°C. Die Viskosität des Silikonkautschuk hängt dabei insbesondere von der Größe der Teilchen bzw. Vorgranulationsprodukte ab, die zu Granulaten geformt werden sollen. Bei größeren Ausgangsmaterialien verwendet man im allgemeinen einen Silikonkautschuk mit höherer Viskosität. Besonders bevorzugt liegt die Viskosität des Silikonkautschuks im Bereich von 10 bis 50000 mPas bei 20°C und am meisten bevorzugt im Bereich von 10000 bis 30000 mPas bei 20°C.

Noch ein weiterer Gegenstand der vorliegenden Erfindung ist eine pyrotechnische Mischung, die durch eines der beschriebenen Herstellungsverfahren erhältlich ist.

Die erfindungsgemäße pyrotechnische Mischung wird vorzugsweise als Treibladung für Gasgeneratoren von Airbags verwendet. Als Gasgeneratoren zur Verwendung der erfindungsgemäßen pyrotechnischen Mischung sind an sich beliebige, aus dem Stand der Technik bekannte Gasgeneratoren für Airbags geeignet. Durch Verwendung der erfindungsgemäßen pyrotechnischen Mischung ist es allerdings möglich, die Gasgeneratoren gegenüber dem Stand der Technik erheblich zu vereinfachen und/oder zu verkleinern. Im allgemeinen weist ein Gasgenerator zur Verwendung der erfindungsgemäßen pyrotechnischen Mischung einen Behälter mit mehreren Ausstromöffnungen auf, wobei in dem Behälter die pyrotechnische Mischung und mindestens ein Anzündelement für die pyrotechnische Mischung angeordnet sind.

Ein Gegenstand der vorliegenden Erfindung ist somit auch ein Gasgenerator, insbesondere für einen Airbag, der als Treibladung die erfindungsgemäße pyrotechnische Mischung enthält. Durch den hohen Wirkungsgrad bzw. die Effektivität der erfindungsgemäßen pyrotechnischen Mischung enthält der Gasgenerator vorzugsweise die pyrotechnische Mischung in einer Menge von 0,05 bis 0,7 g/l, besonders bevorzugt von 0,08 bis 0,45 g/l und am meisten bevorzugt von 0,1 bis 0,3 g/l des vom Generator während eines Aufblasens des Airbags durch die gezündete Treibladung zu erzeugenden Gasvolumens. Gasgeneratoren für Airbags gemäß dem Stand der Technik enthalten im Gegensatz dazu die Treibladung in einer Menge von weit über 1 g/l des vom Generator während des Aufblasens zu erzeugenden Gasvolumens. Die erfindungsgemäße Mischung kann hingegen überraschenderweise in erheblich geringerer Menge verwendet werden, gute Ergebnisse wurden beispielsweise durch Verwendung von 4,5 g der Mischung in einem 12 l-Airbag bzw. 12 g der Mischung in einem 60 l-Airbag erzielt, wobei unter diesem Gasvolumen das Volumen bei Normaldruck der durch den Abbrand der Treibladung entstehenden Gase zu verstehen ist. (Bezüglich dieser Werte für das Airbagvolumen ist anzumerken, daß sie normalerweise geringer als die Werte des wie oben angegeben bestimmten Volumens der Reaktionsgase sind, z.B. kann zum Aufblasen eines 60 l-Airbags ein Gasvolumen von 80 - 140 l erforderlich sein). Die erfindungsgemäße Mischung kann natürlich nicht nur für Airbags in dieser Größe, sondern auch für größere Airbags mit einem Volumen von z.B. mehr als 100 l verwendet werden.

Die Messung dieses Gasvolumens erfolgt in einem geschlossenen Tank, insbesondere einem Tank mit einem Volumen $V_0$ (z.B. 60 l), in dem sich z.B. 10 - 20 g Treibladung innerhalb des Hochdruckbehälters befinden. Das Innenvolumen des Tanks ist vor der Zündung der Treibladung bei einem Umgebungsdruck $P_0$ von ca. 1 atm. Nach Zündung der Treibladung wird ein Druckanstieg im Tank auf einen Wert $P_{max}$ beobachtet. Aus diesem Druckanstieg ($P_{max} - P_0$) läßt sich dann das Volumen $V_1$ der Reaktionsgase bei Umgebungsdruck (ca. 1 atm) bestimmen:

$$V_1 = \frac{P_{max}}{P_0} \cdot V_0$$

Der Gasgenerator mit der erfindungsgemäßen Mischung enthält vorzugsweise einen Behälter mit mehreren Ausströmöffnungen, in dem sich die pyrotechnische Mischung und mindestens ein Anzündelement befinden. Anzündelemente sind aus dem Stand der Technik bekannt, Beispiele hierfür sind etwa Mischungen aus Bor und Kaliumnitrat. Das Anzündelement ist vorzugsweise nicht mit der Treibladung vermischt, sondern ist separat davon angeordnet. Weiterhin ist hinsichtlich der Anzündelemente für die erfindungsgemäße pyrotechnische Mischung zu beachten, daß sie aufgrund des hohen Wirkungsgrads der erfindungsgemäßen Mischung im Vergleich zum Stand der Technik schwächer sein können. Weiterhin sollte die Anordnung des, Anzündelements bzw. der Anzündelemente im Behälter vorzugsweise derart sein, daß bei der Zündung das Granulat nicht in eine Ecke gepreßt wird. Das Anzündelement bzw. die Anzündelemente sollten stattdessen derart angeordnet sein, daß eine möglichst gleichförmige Zündung der pyrotechnischen Mischung ermöglicht wird. Bei einem zylinderförmigen Behälter kann dies beispielsweise dadurch erreicht werden, daß das Anzündelement bzw. die Anzündelemente in Form kleinerer Hohlzylinder sind, die innerhalb des Behälters angeordnet sind. Die Zündung des Anzündelements kann auf bekannte Weise, z.B. mechanisch durch Schockwellen oder elektrisch erfolgen.

Der Behälter für den erfindungsgemäßen Gasgenerator kann beispielsweise im wesentlichen zylinderförmig mit einer Vielzahl von umfangseitigen Öffnungen, z.B. in Form von Kanälen, ausgebildet sein. Der Behälter kann jedoch natürlich auch andere Formen aufweisen, z.B. eine toroidale Form, wie etwa in Airbags des Standes der Technik. Weiterhin ist der Behälter insbesondere für Airbaganwendungen so ausgestaltet, daß er dem in seinem Inneren beim Aufblasen des Airbags durch Zündung der Treibladung entstehenden Druck widerstehen kann. Ein weiterer Vorteil der erfindungsgemäßen pyrotechnischen Mischung besteht darin, daß dieser Druck aufgrund des hohen Wirkungsgrads der Mischung wesentlich geringer als bei bekannten Gasgeneratoren des Standes der Technik ist. Der Behälter sollte so ausgestaltet sein, daß er einen Druck von mehr als 20 bar, vorzugsweise 20 bis 100 bar und besonders bevorzugt 50 bis 60 bar widerstehen kann. Bei Airbag-Gasgeneratoren des Standes der Technik werden im allgemeinen erheblich größere Drucke von bis zu 600 bar erzeugt.

Der bei Verwendung der erfindungsgemäßen pyrotechnischen Mischung im Behälter des Gasgenerators entstehende geringe Druck führt dazu, daß der Behälter nur eine relativ dünne Wandstärke aufweisen muß, wodurch die Herstellung des Behälters einfacher und billiger wird. So haben sich beispielsweise Behälter als geeignet erwiesen, die eine Umfangswand mit einer Wandstärke von 0,5 bis 10 mm aufweisen und wobei der Werkstoff des Behälters aus Metall, insbesondere Aluminium oder korrosionsbeständigem Stahl, besonders bevorzugt Aluminium, oder aus Keramik- oder Glasmaterialien, insbesondere Silikat, besteht. Je nach Ausführungsform des Behälters sind insbesondere Wandstärken im Bereich von 0,5 - 2 mm bei Verwendung von Separatoren wie im folgenden erklärt oder im Bereich von 4 - 10 mm ohne Separatoren bevorzugt. Die Herstellung von Aluminiumbehältern mit den oben genannten Wandstärken ist auf technisch einfache Weise möglich, z.B. durch Tiefziehen. Separatoren im Sinne dieser Erfindung sind insbesondere als Filter bzw. Siebe aufzufassen.

Die erfindungsgemäße pyrotechnische Mischung liegt im Behälter vorzugsweise in einer locker geschütteten Form vor, d.h. die Beladungsdichte der pyrotechnischen Mischung sollte nicht größer als die oben angegebene bevorzugte Schüttdichte sein. Weiterhin sollte die pyrotechnische Mischung im Behälter durch ein Aodichtungselement, insbesondere eine Kunststoffoder Metallfolie, vor einem Kontakt mit der Atmosphäre geschützt sein. Dieses Aodichtungselement kann sowohl innerhalb als auch außerhalb des Behälters vorgesehen sein. Das Abdichtungselement kann auch durch den Behälter selbst gebildet werden, wenn dieser als geschlossene Form mit "Sollöffnungsstellen" ausgebildet ist, die erst bei Zündung der Treibladung geöffnet werden und einen Kontakt mit der Atmosphäre schaffen.

Die Öffnungen oder "Sollöffnungsstellen" im Behälter können vielfältig ausgestaltet sein, wobei jedoch kreisförmige Öffnungen bevorzugt sind. Die Anzahl und der Durchmesser dieser Öffnungen kann abhängig von der Konstruktion des jeweiligen Behälters variieren. Für einen zylindrischen Behälter mit einem Innenvolumen von 10 cm³, der mit 4,5 g der erfindungsgemäßen pyrotechnischen Mischung beladen wird und zum Aufblasen eines 12 l-Airbags dient, hat sich beispielsweise eine Zahl von 28 Löchern mit einem Durchmesser von jeweils 2,5 mm in der Umfangswand des Behälters als geeignet erwiesen. Der Durchmesser dieser Löcher kann vorzugsweise von 1 mm bis 5 mm, besonders bevorzugt von 2 mm bis 3 mm variieren.

Für eine reproduzierbare Verbrennung der Treibladung ist es bevorzugt, wenn während des Aufblasens des Airbags im Innenraum des Behälters ein um mehr als den Faktor 2 höherer Druck als außerhalb des Behälters herrscht. Auf diese Weise können die bei der Verbrennung entstehenden Gase mit Schallgeschwindigkeit durch die Öffnungen des Behälters strömen, so daß eine Entkopplung der Verbrennung im Innenraum des Behälters von den Vorgängen außerhalb des Behälters erreicht wird. Unter dem Begriff "während des Aufblasens" ist in diesem Zusammenhang zu verstehen, daß die Druckdifferenz zwischen dem Behälter und außerhalb nicht bereits während der Zündung des Anzündelements herrschen muß, daß sie aber vorzugsweise während des gesamten Abbrennens der Treibladung vorhanden ist.

Der Behälter des Gasgenerators ist in einer bevorzugten Ausführungsform der vorliegenden Erfindung mindestens im Bereich der Öffnungen von einem Raumbereich umgeben, der durch einen gasdurchlässigen Separator vom eigentlichen Airbagvolumen, d.h. vom Volumen zwischen Separator und Airbaghülle, abgegrenzt ist. Dieser Raumbereich kann auch auf solche Weise ausgestaltet sein, daß während des Aufblasens des Airbags durch die gezündete Treibladung in diesem Raumbereich ein höherer Druck als im Airbagvolumen herrscht. Eine andere Funktion des Separators besteht darin, als Rückhalteelement für feste Teilchen zu dienen, die bei der Verbrennung der pyrotechnischen Mischung aus dem Behälter geschleudert werden. Dabei ist anzumerken, daß der Separator vorzugsweise so ausgestaltet ist, daß er keine oder nur eine unwesentliche druckreduzierende Wirkung ausübt. Die Hauptaufgaben liegen jedoch darin, die ausströmenden Partikel zurückzuhalten und zu verbrennen sowie die gebündelten heißen Gasstrahlen aufzuweiten. Die aufgeweiteten Gasstrahlen stellen für das Gewebe des Airbags keine Gefahr dar. Somit kann der gefaltete Airbag dicht am Gasgenerator gelagert sein.

Ein im Sinne der Erfindung günstiger Raumbereich kann beispielsweise auch dadurch entstehen, daß man einen Behälter mit einer größeren Wandstärke von vorzugsweise 4 - 10 mm verwendet, in dem die Öffnungen als Kanäle, z.B. als Bohrungen oder Düsen, ausgebildet sind. Die Kanäle können gerade oder auch gekrümmt durch die Behälterwand verlaufen.

Bei Vorhandensein eines Separators ist der Raumbereich vorzugsweise durch die Umfangswand des Behälters und den Separator begrenzt, wobei der Separator für feste, bei der Zündung der Treibladung entstehende und aus dem Behälter austretende Teilchen mit einem Durchmesser von mindestens 0,3 mm, besonders bevorzugt von mindestens 0,1 mm undurchlässig ist. Der Separator kann aus einer oder mehreren Schichten aufgebaut sein. Beispielsweise kann der Separator mindestens ein inneres Separatorelement und mindestens ein äußeres Separatorelement umfassen, wobei in einer besonders bevorzugten Ausführungsform als Separatorelemente mindestens ein inneres Metallnetz mit einer groben Maschenweise und ein äußeres Metallnetz mit einer feineren Maschenweite vorgesehen sind. Die Metallnetze können z.B. aus korrosionsbeständigem Stahl gefertigt sein. Die lichte Maschenweite des groben Metallnetzes beträgt vorzugsweise 0,4 bis 1 mm, besonders bevorzugt 0,5 bis 0,8 mm, und die lichte Maschenweite des äußeren Metallnetzes beträgt vorzugsweise 0,1 bis 0,3 mm, besonders bevorzugt 0,1 bis 0,25 mm. Die Drahtstärke des inneren Metallnetzes beträgt vorzugsweise 0,05 bis 0,5 mm und die des äußeren Metallnetzes von 0,05 bis 0,3 mm. Die Höhe der Metallnetze entspricht im allgemeinen der doppelten Drahtstärke. Zwischen dem inneren Metallnetz und dem äußeren Metallnetz kann gegebenenfalls ein Abstandselement vorgesehen sein: Weiterhin kann beispielsweise noch ein Filterelement aus wärmebeständigem Material, z.B. Steinwolle, zwischen den einzelnen Separatorelementen angeordnet sein. Weiterhin kann der Aufbau des Separators auch so sein, daß außerhalb des feinen Metallnetzes noch ein weiteres gröberes Metallnetz vorgesehen ist, das zur mechanischen Stabilisierung des feinen Metallnetzes dient.

Der Separator sollte im allgemeinen nicht direkt im Bereich der Öffnung an der Umfangswand des Behälters anliegen, er wird vorzugsweise durch Abstandselemente in einer vorbestimmten Entfernung von der Umfangswand des Behälters gehalten. Diese Abstandselemente können beispielsweise als eine um den Behälter gelegte Spiralfeder oder als auf der Außenwand des Behälters befindliche Vorsprünge ausgebildet sein. Andererseits kann der Separator auch mit Hilfe von Fixierringen in dem gewünschten Abstand vom Behälter gehalten werden. Der Abstand des Separators vom Behälter ist vorzugsweise derart, daß ein Ausströmen des bei der Verbrennung der Treibladung entstehenden Gases durch die Öffnungen des Behälters mit Schallgeschwindigkeit gewährleistet ist. Es haben sich in der Praxis Abstände von 2 bis 8 mm, vorzugsweise von 3 bis 6 mm und besonders bevorzugt von 3,5 bis 5 mm als geeignet erwiesen.

Weiterhin können zusätzliche Abstandselemente aus wärmedämmendem Werkstoff, z.B. Keramikmaterialien, vorgesehen sein, um die Airbaghülle währnd des Aufblasens vor einem Kontakt mit dem Behälter und dem Separator, sofern dieser vorhanden ist, zu schützen. Auf diese Weise wird die Gefahr des Reißens der Airbaghülle durch übermäßige Erhitzung vermieden werden.

Noch eine weitere Ausführungsform der vorliegenden Erfindung betrifft einen Gasgenerator für Airbags, umfassend:

- einen Behälter mit mehreren Ausströmöffnungen, in dem sich eine gaserzeugende Treibladung befindet, die in Form von Granulatteilchen mit einer Korngröße von 200 μm - 12 mm ist,
- mindestens ein Anzündelement zur Anzündung der Treibladung, und

- einen Raumbereich, der den Behälter mindestens im Bereich der Öffnungen umgibt und der (a) durch einen gasdurchlässigen Separator vom Airbagvolumen abgegrenzt ist, oder (b) auf eine solche Weise ausgestaltet ist, daß mindestens während eines Teilabschnitts des Aufblasens des Airbags durch die gezündete Treibladung in diesem Raumbereich ein höherer Druck als im Airbagvolumen herrscht, oder (c) durch einen gasdurchlässigen Separator abgegrenzt und auf eine solche Weise ausgestaltet ist, daß während des Aufblasens in ihm ein höherer Druck als im Airbagvolumen herrscht.

Durch die Granulatform der Mischung kann die Treibladung in einer gegenüber dem Stand der Technik erheblich verringerten Menge von vorzugsweise 0,05 bis 0,7 g/l des vom Gasgenerator während eines Aufblasens des Airbags durch die gezündete Treibladung zu erzeugenden Gasvolumens vorhanden sein. Dieser Gasgenerator kann weiterhin eines oder mehrere, der oben als bevorzugt beschriebenen technischen Merkmale enthalten.

Noch eine weitere Ausführungsform der vorliegenden Erfindung betrifft einen Gasgenerator für Airbags, umfassend:

- einen Behälter mit mehreren Ausströmöffnungen, in dem sich eine gaserzeugende Treibladung befindet, die in einer Menge von 0,05 - 0,7 g pro Liter Gasvolumen vorhanden ist, das bei Umgebungsdruck, das vom Gasgenerator während eines Aufblasens des Airbags durch die gezündete Treibladung erzeugt wird,
- mindestens ein Anzündelement zur Anzündung der Treibladung, und
- einen Raumbereich, der den Behälter mindestens im Bereich der Öffnungen umgibt und der (a) durch einen gasdurchlässigen Separator vom Airbagvolumen abgegrenzt ist, oder (b) auf eine solche Weise ausgestaltet ist, daß mindestens während eines Teilabschnitts des Aufblasens des Airbags durch die gezündete Treibladung in diesem Raumbereich ein höherer Druck als im Airbagvolumen herrscht, oder (c) durch einen gasdurchlässigen Separator abgegrenzt und auf eine solche Weise ausgestaltet ist, daß während des Aufblasens in ihm ein höherer Druck als im Airbagvolumen herrscht.

Die Treibladung ist vorzugsweise in Form von Granulatteilchen mit einer Korngröße von 200 μm - 12 mm. Auch dieser Gasgenerator kann weiterhin eines oder mehrere der oben als bevorzugt beschriebenen technischen Merkmale enthalten.

Schließlich betrifft die Erfindung auch noch eine Airbag-Anordnung, die mindestens einen der oben beschriebenen Gasgeneratoren enthält. So ist es beispielsweise möglich, einen Airbag durch gleichzeitige Zündung mehrerer kleinerer Gasgeneratoren aufzublasen.

Die Erfindung soll weiterhin durch die Figuren 1 bis 5 und die Beispiele beschrieben werden.

Fig. 1 zeigt eine erste Ausführungsform eines erfindungsgemäßen Gasgenerators,

Fig. 2 zeigt eine zweite Ausführungsform eines erfindungsgemäßen Gasgenerators,

Fig. 3 zeigt eine dritte Ausführungsform eines erfindungsgemäßen Gasgenerators,

Fig. 4 zeigt eine erste Ausführungsform eines Separators für einen erfindungsgemäßen Gasgenerator, und

Fig. 5 zeigt eine zweite Ausführungsform des Separators für einen erfindungsgemäßen Gasgenerator.

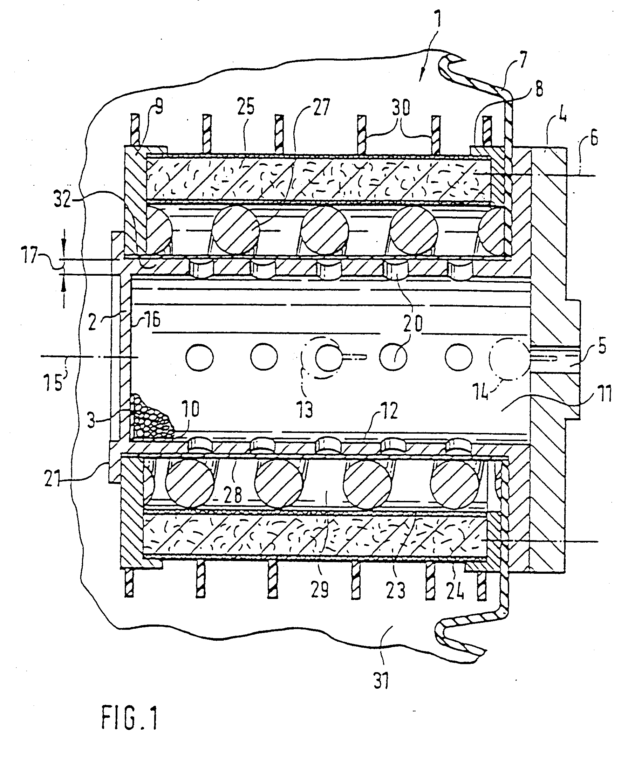

Fig. 1 zeigt eine erste Ausführungsform des erfindungsgemäßen Gasgenerators im Längsschnitt.

Ein Gasgenerator 1 umfaßt einen Behälter 2, der aus Metall (z.B. Aluminium oder korrosionsbeständiger Stahl) gebildet ist, eine granulierte Treibladung 3, einen Verschlußdeckel 4 mit Anzünderöffnung 5, Halteringen 8, 9 für einen Separator 23, 24, 25, der aus Metallnetzen 23, 24 und einem dazwischen befindlichen Filter (25) (z.B. aus Steinwolle) besteht, sowie ein als Schraubenfeder ausgebildetes Abstandselement 27.

Ein aufblasbarer Airbag 7 ist zusammen mit dem Haltering 8 und dem Verschlußdeckel 4 bei 6 verschraubt.

Der Behälter 2 besteht aus dünnwandigem Metallblech, dessen Wanddicke 17 = 1 mm beträgt. Bei einer vollständigen Füllung des Behälters 2 mit 4,5 g der Treibladung 3 können etwa 12 l Gas bei einer Reaktionstemperatur von ca. 1000°C im Innenraum 11 des Behälters erzeugt werden.

Für einen größeren Airbag mit einem Volumen von z.B. 60 l oder 150 l muß die Menge der Treibladung sowie der Generator entsprechend vergrößert werden. Unabhängig davon kann jedoch die Wanddicke 17 von 1 mm gegebenenfalls mit geringen Abweichungen erhalten bleiben.

Ein Bördelrand 21 fixiert die Schraubfeder 27, den Haltering 9, den Separator 23, 24, 25 und einen brennbaren Folienschlauch 28 auf dem Behälter 2.

Der Behälter 2 ist bezüglich der Achse 15 rotationssymmetrisch ausgebildet und daher kostengünstig, z.B. im Tiefziehverfahren herstellbar.

Die Schraubenfeder 27 dient als Abstandselement für den Filter 25 mit den Metallnetzen 23, 24.

Die Öffnungen 20 stellen die Verbindung mit dem Hochdruckraum 11 innerhalb des Behälters 2 und einem Raumbereich 29 zwischen dem Behälter 2 und dem ersten Metallnetz 23 dar. Der Filter 25 weist einen geringen Strömungswiderstand auf. Der Filter 25 filtert zusammen mit den Sieben 23, 24 feste Teilchen der abbrennenden Treibladung 3 aus dem Gasstrom und gewährleistet die Verbrennung der noch nicht verbrannten Partikel. Schließlich kann mit dem Filter 25 und den Metallnetzen 23, 24 die Gastemperatur des in den Gassack 7 strömenden Gases gesteuert werden. Die Siebe 23, 24 stützen weiterhin den Filter 25 mechanisch in dem Gasgenerator 1 ab.

Die Öffnungen 20 sind ein wesentlicher Parameter, um den Druckverlauf bei der Zündung der Treibladung zu steuern und zwar sowohl im Hochdruckraum 11 im Inneren des Behälters 2 sowie im Raumbereich 29 und im Airbagvolumen 31.

Abstandsringe 30, die z.B. aus Keramik angefertigt sein können, haben die Aufgabe, den zusammenfallenden Gassack 7 von möglicherweise heißen Teilen des Gasgenerators fernzuhalten.

Nach dem Anzünden des gaserzeugenden Satzes 3 über ein oder mehrere Anzündelemente 13, 14 reißt der aus Kunststoff bestehende Folienschlauch 28 und gibt die Öffnungen 20 frei. Das Gas entspannt sich dann im Raumbereich 29 zwischen dem inneren Metallnetz 23 und der Umfangswand 32 des Behälters 2, der von der Schraubenfeder 27 definiert ist. Dann durchströmt das Gas den Filter 25, um den Airbag 7 aufzublasen. Nach dem Füllvorgang kann das Gas auf nicht gezeigte Weise aus dem Airbag 7 entweichen. Der Airbag 7 fällt dann in sich zusammen und kann sich an die Abstandsringe 30 anlegen. Diese wärmeisolierenden Abstandsringe 30 verhindern das Durchbrennen des Airbags 7 und somit die Gefährdung von Personen. Es hat sich jedoch gezeigt, daß der Gasgenerator in seinen Außenbereichen nur eine Temperatur von 50 bis 60°C aufweist, so daß die Abstandsringe 30 nicht essentiell sind.

Anstelle des außen am Behälter 2 umfangsseitig anliegenden Folienschlauches 2 kann die Treibladung 3 auch in einer feuchtigkeitsdichten Folie 10 eingefüllt sein. Bei Zündung der Treibladung 3 werden bei einem bestimmten kritischen Gasdruck aus der Folie 10 Löcher entsprechend den Öffnungen 20 herausgestanzt. Das Konfektionieren der Treibladung 3 in der Folie 10 ist einfach, kostengünstig und bezüglich der Treibladungsmenge sehr genau. Dieser Vorgang erfolgt separat. Die Montage der in der Folie 10 abgepackten Treibladung gegebenenfalls zusammen mit einem integrierten Anzündmittel ist einfach und sicher durchzuführen. Die Verwendung separater Anzündelemente 13, 14 ist jedoch bevorzugt. Andererseits kann die Folie 10 auch nur an der Innenwand 12 anliegen, wobei eine Stirnwand 16 und der Verschlußdeckel 4 keine Folie 10 tragen müssen. Generell weist die im Behälter 2 angeordnete Folie 10 gegenüber dem außen angeordneten Folienschlauch 28 den Vorteil auf, daß entsprechend dem Querschnitt der Öffnungen 20 definiert die Folie herausgestanzt wird. Bei dem außen angeordneten Folienschlauch 28 kann sich dieser aufblähen und reißt nicht definiert.

Die Folie 10 kann aus Metall, wie etwa Aluminium oder Edelstahl, oder auch aus Kunststoff bestehen.

Neben oder zusätzlich zu den Anzündelementen 13, 14 kann auch ein Anzündelement außerhalb des Behälters 2, jedoch innerhalb des Verschlußdeckels 4 vorgesehen sein. Der Behälter 2 ist nicht auf die zylindrische Form beschränkt, sondern kann jede geeignete Form aufweisen, z.B. eine toroidale bzw. "Doughnut"-Form.

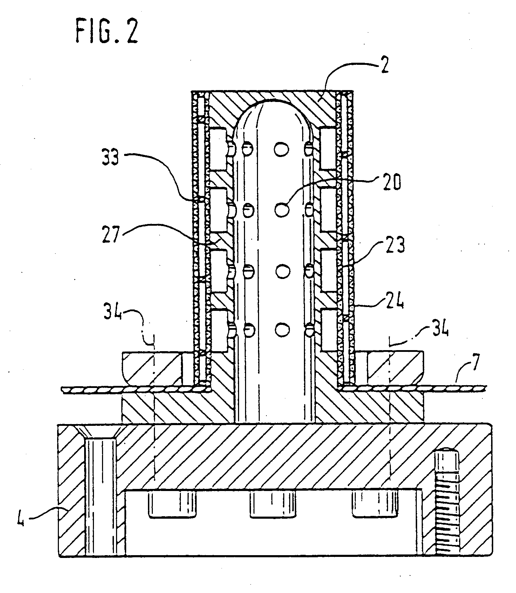

Fig. 2 zeigt eine weitere Ausführungsform eines erfindungsgemäßen Gasgenerators.

Der Gasgenerator für einen Airbag 7 umfaßt einen zylindrischen Behälter 2, der kreisförmige Öffnungen 20 aufweist. Um die Umfangsseite des Behälters 2 ist ein Separator angeordnet, der ein inneres Sieb 23 und ein äußeres Sieb 24 umfaßt. Der Abstand des Separators vom Behälter 2 wird durch Vorsprünge 27 auf der Umfangswand des Behälters 2 definiert. In der gezeigten Ausführungsform beträgt der lichte Abstand zwischen dem inneren Metallnetz 23 und der Umfangswand des Behälters 2 3,75 mm.

Der Abstand zwischen den Sieben 23 und 24 wird durch ein Abstandselement 33, z.B. eine Feder eingestellt.

Der Gasgenerator umfaßt weiterhin einen Deckel 4, der mit Schrauben 34 an dem Behälter 2 befestigt werden kann.

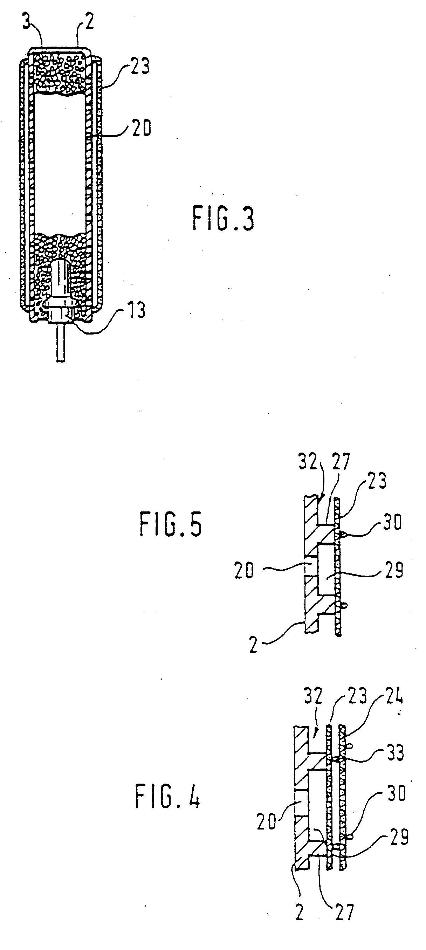

Fig. 3 zeigt eine dritte Ausführungsform des erfindungsgemäßen Gasgenerators. Der Behälter 2 des Gasgenerators enthält eine Treibladung 3 in Form von Granulaten und ein separates Anzündelement 13, das mechanisch oder elektrisch gezündet werden kann. In der Wand des Behälters 2 befinden sich Löcher 20 und in einem Abstand von der Wand des Behälters 2 ist ein separator 23 angeordnet. Der Airbag sowie die Befestigung des Airbags am Gasgenerator sind nicht gezeigt.

Fig. 4 zeigt eine erste Ausführungsform eines Separatorelements. Es ist ein Ausschnitt des Behälters 2 mit einer Öffnung 20 gezeigt. An der Umfangswand 32 des Behälters 2 befinden sich Vorsprünge 27, die einen Raumbereich 29 zwischen dem Separator 23, 33, 24 und der Umfangswand 32 des Behälters 2 definieren. Der Separator besteht aus einem inneren Metallnetz 23 mit einer Maschenweite von 125 bis 130 µm und einer Drahtstärke von 0,081 mm. Das äußere Metallnetz 24 hat eine Maschenweite von 0,49 mm und eine Drahtstärke von 0,3 mm. Die Dicke des inneren Metallnetzes ist 0,15 mm und die des äußeren Metallnetzes 0,48 mm. Die Siebe werden durch ein Abstandselement 33, z.B. eine Schraubenfeder oder einen Fixierring, in Position gehalten. Weiterhin sind Abstandselemente 30 vorgesehen, um einen Kontakt der Airbaghülle (nicht gezeigt) mit dem Separator zu vermeiden.

Fig. 5 zeigt eine ähnliche Ausführungsform des Separators wie Fig. 4, wobei der Separator nur aus einem einzigen Metallnetz 23 mit einer Maschenweite von 0,130 mm besteht. Auch hier sind zum Schutz der Airbaghülle (nicht gezeigt) Abstandelemente 30 vorgesehen.

Anstelle der in den Fig. 4 und 5 gezeigten Separatoren kann ein Raumbereich, bei dem während des Aufblasens des Airbags ein sowohl vom Innenraum des Behälters als auch vom Airbagvolumen verschiedener Druck herrscht, auch so erzeugt werden, daß eine dicke Gehäusewand mit darin befindlichen Kanälen vorgesehen ist, durch die Verbrennungsgase in das Airbagvolumen strömen können. Diese Kanäle können gerade durch die Gehäusewand verlaufen, sie können jedoch auch gekrümmt sein. Wenn die Gase beim Aufblasen des Airbags durch diese Kanäle strömen, so herrscht darin ein vom Innenraum und vom Airbagvolumen verschiedener Druck.

In noch einer möglichen Ausführungsform der vorliegenden Erfindung kann ein Separatorelement vorgesehen sein, das direkt an der Außenseite eines z.B. zylindrischen Behälters anliegt. Bei dieser Ausführungsform werden jedoch hohe mechanische Anforderungen an die Festigkeit des Separatorelements gestellt, so daß ein Abstand von 2 bis 8 mm, vorzugsweise 3 bis 6 mm und besonders bevorzugt 3,5 bis 5 mm zwischen der äußeren Umfangswand des Behälters und dem Separator (ausgedrückt als lichte Weite) bevorzugt ist.

Das folgende Beispiel soll die Herstellung der erfindungsgemäßen pyrotechnischen Mischung erläutern.

BEISPIEL

Komponenten

a) Kaliumnitrat, Fluka Nr. 60415 oder Merck 5063
b) Natriumazid, Fluka Nr. 71290 oder Merck 6688
c) Nitrocellulose (Collodiumwolle N-Gehalt 12,2 %)
d) Silikonkautschuk RTVM 521 (Elastosil 4500) Wacker-Chemie

26,9 Gewichtsteile Kaliumnitrat und 52,2 Gewichtsteile Natriumazid werden einzeln in einer Rotormühle auf eine Korngröße < 80 µm zerkleinert. Die zerkleinerten Teilchen werden mit 1,6 Gewichtsteilen Nitrocellulose trocken bis zur Homogenität gemischt.

Anschließend wird die trockene Mischung mit Aceton angeteigt, so daß eine plastische Masse entsteht. Überschüssiges Lösungsmittel wird unter Rühren und Kneten so lange ausgetrieben, bis die Masse einen krümeligen Zustand erreicht. Dann wird die krümelige Masse durch ein 0,4 mm Sieb granuliert. Das Granulat wird getrocknet und anschließend kann der Feinanteil von < 200 µm abgesiebt, erneut angeteigt und nachgranuliert oder der nächsten Charge zugeschlagen werden.

Den auf diese Weise erhaltenen Vorgranulationsprodukten werden 19,0 Gewichtsteile Silikonkautschuk, der zuvor mit 4 % Härter T37 (Wacker Chemie) vermischt wurde, zugesetzt und vorsichtig verrührt. Anschließend wird die Mischung geknetet, bis alle Partikel mit Silikonkautschuk benetzt sind. Dann wird die Mischung durch ein 1,6 mm Sieb granuliert und bei erhöhter Temperatur augehärtet.

Falls erforderlich, kann wiederum ein etwaiger Feinanteil ausgesiebt werden.

In einer weiteren Ausführungsform der vorliegenden Erfindung können Kaliumnitrat und Natriumazid auch ohne Zwischengranulation mit Nitrocellulose direkt mit dem Silikonkautschuk vermischt und anschließend granuliert werden.

**Patentansprüche**

1. Airbaganordnung, enthaltend einen Gasgenerator, umfassend:

   - einen Behälter (2) mit mehreren Ausströmöffnungen (20), in dem sich eine gaserzeugende Treibladung (3) befindet, die in einer Menge von 0,05 bis 0,7 g pro Liter Gasvolumen bei Umgebungsdruck vorhanden ist, das vom Gasgenerator während des Aufblasens des Airbags durch die gezündete Treibladung erzeugt wird,
   - mindestens ein Anzündelement (13, 14) zur Anzündung der Treibladung (3), und
   - einen Raumbereich (29), der den Behälter (2) mindestens im Bereich der Öffnungen (20) umgibt und der (a) durch einen gasdurchlässigen Separator (23, 24, 25) vom Airbagvolumen (31) abgegrenzt ist, oder (b) auf eine solche Weise ausgestaltet ist, daß während des Aufblasens des Airbags durch die gezündete Treibladung (3) in diesem Raumbereich (29) ein höherer Druck als im Airbagvolumen (31) herrscht, oder (c) durch einen gasdurchlässigen Separator (23, 24, 25) abgegrenzt und auf eine solche Weise ausgestaltet ist, daß während des Aufblasens in ihm ein höherer Druck als im Airbagvolumen (31) herrscht.

2. Airbaganordnung nach Anspruch 1,
   **dadurch gekennzeichnet,**
   daß die Treibladung in Form von Granulatteilchen mit einer Korngröße von 200 µm - 12 mm ist.

3. Airbaganordnung nach Anspruch 1 oder 2,
   **dadurch gekennzeichnet,**
   daß während des Aufblasens des Airbags im Innenraum des Behälters (2) ein um mehr als den Faktor 2 höherer Druck als außerhalb des Behälters (2) herrscht.

4. Airbaganordnung nach einem der Ansprüche 1 bis 3,
   **dadurch gekennzeichnet,**
   daß der Behälter (2) im wesentlichen zylinderförmig mit einer Vielzahl von umfangseitigen Öffnungen (20) ausgebildet ist.

5. Airbaganordnung nach einem der Ansprüche 1 bis 4,
   **dadurch gekennzeichnet,**
   daß der Behälter (2) eine Umfangswand (32) mit einer Wandstärke von 0,5 - 10 mm aufweist und der Werkstoff des Behälters (2) aus Metall, insbesondere Aluminium oder korrosionsbeständigem Stahl, oder Keramikstahl, insbesondere Silikat, besteht.

6. Airbaganordnung nach einem der Ansprüche 1 bis 5,
   **dadurch gekennzeichnet,**
   daß der Raumbereich (29) durch die Umfangswand (32) des Behälters (2) und durch einen Separator (23, 24, 25) begrenzt ist, wobei der Separator für feste, bei der Verbrennung der Treibladung entstehende und aus dem Behälter austretende Teilchen mit einem Durchmesser von mindestens 0,3 mm undurchlässig ist.

7. Airbaganordnung nach einem der Ansprüche 1 bis 6,
   **dadurch gekennzeichnet,**
   daß der Abstand des Separators (23, 24, 25) von der Umfangswand (32) des Behälters (2) zumindest im Bereich der Öffnungen (20) derart ist, daß ein Ausströmen des bei der Verbrennung der Treibladung entstehenden Gases durch die Öffnungen (20) des Behälters mit Schallgeschwindigkeit gewährleistet ist.

8. Airbaganordnung nach Anspruch 7,
   **dadurch gekennzeichnet,**
   daß der Abstand des Separators (23, 24, 25) von der Umfangswand (32) des Behälters (2) mindestens im Bereich der Öffnungen 3,5 bis 5 mm ist.

9. Airbaganordnung nach einem der Ansprüche 6 bis 8,
   **dadurch gekennzeichnet,**
   daß der Separator mindestens ein inneres Separatorelement (23) und mindestens ein äußeres Separatorelement (24) umfaßt.

10. Airbaganordnung nach Anspruch 9,
    **dadurch gekennzeichnet,**
    daß als Separatorelemente mindestens ein inneres Metallnetz (23) mit einer Maschenweite von 0,4 bis 1 mm und mindestens ein äußeres Metallnetz (24) mit einer Maschenweite von 0,1 bis 0,3 mm vorgesehen sind.

11. Airbaganordnung nach Anspruch 10,
    **dadurch gekennzeichnet,**
    daß das innere Metallnetz (23) eine Drahtstärke von 0,05 - 0,5 mm und daß äußere Metallnetz (24) eine Drahtstärke von 0,05 - 0,3 mm aufweist.

12. Airbaganordnung nach einem der Ansprüche 9 bis 11,
    **dadurch gekennzeichnet,**
    daß ein Filter (25) aus temperaturbeständigem Material zwischen dem inneren Separatorelement (23) und dem äußeren Separatorelement (24) vorgesehen ist.

13. Airbaganordnung nach einem der Ansprüche 1 bis 12,
    **dadurch gekennzeichnet,**
    daß Abstandselemente (30) aus wärmedämmendem Werkstoff vorgesehen sind, die eine Airbaghülle (7) während des Aufblasens vor einem Kontakt mit dem Behälter (2) und/oder dem Separator (23, 24, 25) schützen.

14. Airbaganordnung nach einem der Ansprüche 1 bis 13,
    **dadurch gekennzeichnet**,
    daß die pyrotechnische Mischung (3) im Behälter (2) in einer locker geschütteten Form vorliegt.

15. Airbaganordnung nach einem der Ansprüche 1 bis 14,
    **dadurch gekennzeichnet**,
    daß die pyrotechnische Mischung (3) im Behälter (2) durch ein Abdichtungselement (10, 28), insbesondere eine Kunststoff- oder Metallfolie, vor einem Kontakt mit der Atmosphäre geschützt ist.

16. Airbaganordnung nach einem der Ansprüche 1 bis 15,
    **dadurch gekennzeichnet**,
    daß sie mehr als einen Gasgenerator enthält.

FIG.1

FIG. 2

FIG.3

FIG.5

FIG.4

Europäisches Patentamt

## EUROPÄISCHER RECHERCHENBERICHT

Nummer der Anmeldung

EP 95 11 9144

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | US-A-5 125 684 (R.V. CARTWRIGHT) <br> * Spalte 3, Zeile 62 - Spalte 4, Zeile 9 * <br> --- | 2 | B60R21/26 <br> C06D5/06 |
| Y | EP-A-0 474 115 (NIPPON KAYAKU KK) 11.März 1992 <br> * Seite 1, Zeile 52 - Zeile 56 * <br> * Seite 11, Zeile 13 - Zeile 17 * <br> --- | 2 | |
| Y | US-A-4 734 141 (CARTWRIGHT RICHARD V  ET AL) 29.März 1988 <br> * Spalte 4, Zeile 18 - Zeile 29; Tabelle II * <br> --- | 1 | |
| Y | EP-A-0 496 267 (DYNAMIT NOBEL AG) 29.Juli 1992 <br> * das ganze Dokument * <br> --- | 1-16 | |
| Y | DE-A-40 05 768 (BAYERN CHEMIE GMBH FLUGCHEMIE) 29.August 1991 <br> * das ganze Dokument * <br> --- | 1-16 | |
| Y | EP-A-0 069 441 (THIOKOL CORP) 12.Januar 1983 <br> * das ganze Dokument * <br> --- | 1-16 | RECHERCHIERTE SACHGEBIETE (Int.Cl.5) <br> B60R <br> C06D <br> C06B |
| Y | FR-A-2 673 119 (GANTOIS ETS ;LIVBAG SNC (FR)) 28.August 1992 <br> * Seite 6, Zeile 17 - Zeile 23 * <br> * Seite 7, Zeile 16 - Seite 8, Zeile 10; Abbildungen 1-6 * <br> --- | 1,4, 6-12,16 | |
| Y | DE-A-38 24 162 (BAYERN CHEMIE GMBH FLUGCHEMIE) 18.Januar 1990 <br> * Spalte 1, Zeile 27 - Zeile 45 * <br> * Spalte 1, Zeile 67 - Spalte 2, Zeile 27; Ansprüche * <br> --- | 1,15 | |

-/--

Der vorliegende Recherchenbericht wurde für alle Patentansprüche erstellt

| Recherchenort | Abschlußdatum der Recherche | Prüfer |
|---|---|---|
| DEN HAAG | 3.April 1996 | Schut, R |

EPO FORM 1503 03.82 (P04C03)

Europäisches
Patentamt

# EUROPÄISCHER RECHERCHENBERICHT

Nummer der Anmeldung

EP 95 11 9144

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | DE-A-39 09 841 (DYNAMIT NOBEL AG) 27.September 1990 * Spalte 1, Zeile 24 - Zeile 31; Abbildungen * --- | 13 | |
| Y | US-A-4 796 912 (LAURITZEN DONALD R ET AL) 10.Januar 1989 * das ganze Dokument * --- | 1-12, 14-16 | |
| Y | US-A-4 243 443 (UTRACKI LECHOSLAW A M) 6.Januar 1981 * Spalte 3, Zeile 44 - Spalte 4, Zeile 19 * * Spalte 5, Zeile 41 - Zeile 51 * * Spalte 6, Zeile 54 - Spalte 7, Zeile 29 * --- | 2 | |
| Y | DE-C-39 35 869 (BAYERN-CHEMIE GESELLSCHAFT FÜR FLUGCHEMISCHE ANTRIEBE MBH) * Seite 4; Tabelle 1 * ----- | 1 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 3.April 1996 | Schut, R |